Europäisches Patentamt

European Patent Office

Office européen des brevets

(11) Publication number: **0 413 582 B1**

# EUROPEAN PATENT SPECIFICATION

(45) Date of publication of patent specification: **18.01.95**

(51) Int. Cl.6: **B60C 9/00**, B60C 9/20

(21) Application number: **90308995.1**

(22) Date of filing: **16.08.90**

(54) **Pneumatic radial tires.**

(30) Priority: **17.08.89 JP 210580/89**

(43) Date of publication of application:
**20.02.91 Bulletin 91/08**

(45) Publication of the grant of the patent:
**18.01.95 Bulletin 95/03**

(84) Designated Contracting States:
**DE ES FR GB IT LU**

(56) References cited:
**EP-A- 0 317 636**
**GB-A- 2 081 765**
**NN-A-**

**KAUTSCHUK UND GUMMI - KUNSTSTOFFE. vol. 27, no. 4, 1974, HEIDELBERG DE pages 145 - 151; W.F. Kern: "Dynamische Dauer-festigkeitsprüfungen von Stahlcord in Gummi-Verbundkörpern - Einsatz der Um-laufbiegemaschine"**

**C.M. Blow: "Rubber Technology and Manu-facture" 1971, The Butterworth Group, Lon-don**

**S.K. Clark (ed): "Mechanics of Pneumatic Tires" no. 720247, 1971, United States De-partment of Commerce, Washington * page 248* Table 1.4.13**

(73) Proprietor: **Bridgestone Corporation**
**1-1, Kyobashi 1-Chome**
**Chuo-Ku**
**Tokyo 104 (JP)**

(72) Inventor: **Bundo, Motonori**
**16-17-312, Hagiyama-cho 2-chome**
**Higashimurayama City,**
**Tokyo (JP)**
Inventor: **Kuriya, Yoshinori**
**5-5-819, Ogawahigashi-Cho 3-chome**
**Kodaira City,**
**Tokyo (JP)**

(74) Representative: **Whalley, Kevin et al**
**MARKS & CLERK,**
**57-60 Lincoln's Inn Fields**
**London WC2A 3LS (GB)**

**Description**

This invention relates to pneumatic radial tires which use steel cords having a high strength, a low bending rigidity and a good flexibility as a cord for a belt, and more particularly to radial tires for passenger cars having good running performances and radial tires for running on rough roads.

It is well-known that single strand steel cord of $1 \times n$ (n = 2-5) is used as a steel cord for a belt of the radial tire. Furthermore, the steel cord generally used for such a purpose has a filament diameter of not less than 0.22 mm and also the tensile strength of such a filament is about $2746 \times 10^6$ Pa ($280$ kg/mm$^2$).

In Japanese Utility Model laid open No.63-186798 is disclosed a technique that twelve filaments each having a tensile strength of $2942$-$3530 \times 10^6$ Pa ($300$-$360$ kg/mm$^2$) are twisted into a core strand and further 11 to 14 filaments are twisted thereon as a sheath. In this reference, it is described that the adhesion property to rubber and the fretting resistance can be improved by using such steel cords in addition to the weight reduction.

Furthermore, Japanese Patent laid open No. 58-128902 discloses that steel cords each containing a carbon content of 0.75-0.85% by weight and having a strength higher than that of the conventional cord and a retention of knot strength of not less than 60% are applied to the pneumatic tire. Particularly, it is described in Example 1 of this reference that steel cords of $1 \times 4 \times 0.22$ are used as a belt reinforcement of a passenger car radial tire, whereby the tire weight is reduced to reduce the fuel consumption and the number of cord cuts during the running.

Moreover, Japanese Patent laid open No. 59-124409 discloses that the rigidity of the belt is increased by enhancing the dispersion degree of filaments having a filament diameter of 0.06-0.40 mm in the cord, whereby the fuel consumption and resistance to belt folding are improved.

In addition, there are known steel cords having a filament diameter of 0.05-0.40 mm from Japanese Patent laid open No. 59-220403, steel cords having a filament diameter of 0.1-0.4 mm from Japanese Patent Application Publication No. 56-37002, steel cords having a filament diameter of 0.15-0.25 mm from Japanese Patent Application Publication No. 56-9963, steel cords having a filament diameter of 0.05-0.15 mm from Japanese Patent laid open No. 49-79914, steel cords having a filament diameter of 0.10-0.40 mm from Japanese Patent laid open No. 51-31612, and steel cords having a filament diameter of 0.06-0.10 mm from Japanese Patent laid open No. 59-38102, respectively, and also it is known to use a combination of such a fine filament diameter with a single twisting structure of $1 \times n$ (n = 3-5).

In Japanese Utility Model laid open No. 63-186798, the filament strength in the steel cord is limited to not more than $3530 \times 10^6$ Pa ($360$ kg/mm$^2$) because when the filament strength exceeds $3530 \times 10^6$ Pa ($360$ kg/mm$^2$), the toughness lowers and the cord is apt to be broken through repetitive bending. Further, the steel cord described in this reference has a layer construction but has not a single twisting construction.

In Example 1 of Japanese Patent laid open No. 58-128902 is disclosed a cord of $1 \times 4 \times 0.22$ structure, and also the cord tenacity is specified to be 442.7-522.7 N (45.1-53.3 kg) by calculation equation. When the filament strength is determined from the cord tenacity, filament diameter and the number of twisted filaments, it is $2971$-$3471 \times 10^6$ Pa ($303$-$354$ kg/mm$^2$). Therefore, this reference does not disclose the filament strength of not less than $3530 \times 10^6$ Pa ($360$ kg/mm$^2$) at all.

There are known many techniques for obtaining high strength and high toughness by specifying the composition of the filament material in the steel cord. In this case, the filament material becomes expensive, so that such a filament is not widely used for rubber reinforcement.

On the other hand, there is known that each filament before twisting into a single twisted steel cord is subjected to helical forming larger than compact cord sectional shape to form a so-called open cord, whereby rubber is penetrated into the inside of the cord to control the occurrence of rust in the steel cord. In order to make the penetration of rubber large, it is necessary to twist the largely helical formed filaments. However, the thus obtained cord has large elongation, so that the workability in the production of rubber articles is difficult. As a means for solving the above problem, Japanese Patent laid open No. 59-157391 discloses a technique that the section of the cord is rendered into an ellipsoid at a ratio of minor axis to major axis of 0.435-0.910 to improve the penetrability of rubber, but does not describe the helical form and strength of the filament at all.

As mentioned above, steel cords of various types are known up to the present. As steel cord used for the belt of the radial tire, it is particularly required to satisfy various durabilities such as high-speed durability during running, resistance to belt breakage, resistance to separation at belt end, and adhesion stability between steel cord and rubber, properties such as steering stability ensuring comfortable running performance and comfortability against vibrations, cornering performance in emergency, and capability of running at a high speed.

In order to satisfy the properties such as steering stability and comfortability against vibrations, the cornering performance in emergency and the running capability at high speed, the tread of the tire is required to provide excellent road gripping performance. In order to ensure the road holding property, and particularly that the tire can be comfortably and rapidly run on an uneven road surface such as a rough road, the belt cord is required to have a function of flexibly and uniformly coming into contact with the ground.

On the other hand, the tire is under pressure, so that the belt of the radial tire is required to have a constant strength because when the strength of the belt is insufficient, breakage of steel cords is likely to occur.

It is, therefore, an aim of the invention to provide a technique wherein the flexibility and mechanical durability of the belt in the radial tire are improved and the belt strength can be maintained or increased within practical range by specifying the structure, properties and filament diameter of the steel cord used for the belt to reduce the flexural rigidity of the steel cord.

The steel cord having a single twisting structure of $1 \times n$ (n = 2-5) is simple in the arrangement of filaments as compared with the steel cords having double twisting structure and strand structure. Further, the production step of the steel cord having the single twisting structure, particularly filament twisting step, is simple and the production is easy and the cost thereof is cheap, and also the penetrability of rubber into the inside of the cord is good and the durability is excellent.

The inventors have made various studies with respect to steel cords capable of being flexible and holding belt strength at a constant value or more as a belt reinforcement of radial tires by using the above industrially advantageous single twisting structure of $1 \times n$ (n = 2-5) and found that the above aim of the invention can be achieved by specifying cord tenacity, ratio of flexural rigidity to cord tenacity and filament diameter in the single twisting structure of $1 \times n$ (n = 2-5) within given ranges, and as a result the invention has been accomplished.

According to the invention, there is provided a pneumatic radial tire comprising at least one belt layer of steel cords between a tread portion and a carcass ply, characterized in that said steel cord satisfies the following conditions:

(1) single twisting structure: $1 \times n$ (n = 2-5);

(2) ratio of flexural rigidity to cord tenacity: 0.04-0.14 $(mm^2)$;

(3) cord tenacity: 196.1-784.5 N (20-80 kg); and

(4) filament diameter: 0.12-0.20 mm.

The invention will be described with reference to the accompanying drawings, wherein:

Fig. 1 is a graph showing a relation between flattening degree of helix and gap between filaments; and

Fig. 2 is a graph showing a relation between filament strength and number of twist turns.

According to the invention, in order to improve the running comfortability of radial tires (steering stability and comfortability against vibrations), cornering performance in emergency and high-speed running performance, the ratio of flexural rigidity to cord tenacity is required to be within a range defined in the above condition (2), preferably a range of 0.04-0.12 $(mm^2)$. Moreover, the feature that the ratio of flexural rigidity to tenacity for the improvement of the above performances is limited to the particular range has not been known from the conventional techniques.

Furthermore, in order to maintain or increase the belt strength within practical range while realizing the improvement of the above properties, the cord tenacity is within the range defined in the above condition (3), preferably a range of 343.2-784.5 N (35-80 kg), and the filament diameter is within the range defined in the above condition (4), and $1 \times 5$ is particularly preferable as the twisting structure of $1 \times n$. Furthermore, the tensile strength of the filament is preferably not less than $3334 \times 10^6$ Pa ($340 \ kg/mm^2$), and is more preferably $3530-4413 \times 10^6$ Pa ($360-450 \ kg/mm^2$). Such a range of the tensile strength can not easily be conceived from the conventional techniques.

In the steel cord comprised of five steel filaments as a belt reinforcement in the radial tire according to the invention, the diameter of each filament is not more than 0.20 mm and also the filament is shaped into a flat helical form in which the flattening degree is preferably not more than 0.85 and the average forming ratio is preferably not less than 120%. Moreover, it is preferable that the steel cords each comprised of such filaments having a strength of not less than $3334 \times 10^6$ Pa ($340 \ kg/mm^2$), more preferably $3530-4413 \times 10^6$ ($360-450 \ kg/mm^2$), is applied to at least one belt layer in the belt.

Preferably, the steel cord is obtained by controlling decarburization of a high carbon steel filament having a carbon content of 0.78-0.86% by weight to patenting step to render the carbon content of surface layer portion of the filament having a diameter of not more than 0.20 mm into not less than 0.70% by weight, drawing the filament up to a true strain of not less than 4.0, twisting five filaments without substantial distortion, and passing these twisted filaments through a group of zigzag arranged small-size rollers so as

EP 0 413 582 B1

to render the helical form of the filament into a flattening ratio of not more than 85%.

There have been known that the strength of the filament can be enhanced to reduce the amount of steel cord used to thereby decrease the weight of rubber article; that the filament strength of the sheath in the layer constructed cord can be enhanced to reduce the number of filaments used in the sheath, whereby a gap is formed among the filaments of the sheath to improve the adhesiveness to rubber and the fretting resistance; that a gap can be formed among filaments of the single twisted cord so as to penetrate rubber into the inside of the cord to thereby improve resistance to corrosion due to water; and that filaments having a diameter of 0.05-0.40 mm can be used, respectively. However, it was not previously known that the rigidity and flexibility of the belt in the radial tire can be simultaneously improved and the belt strength maintained at a constant value or more.

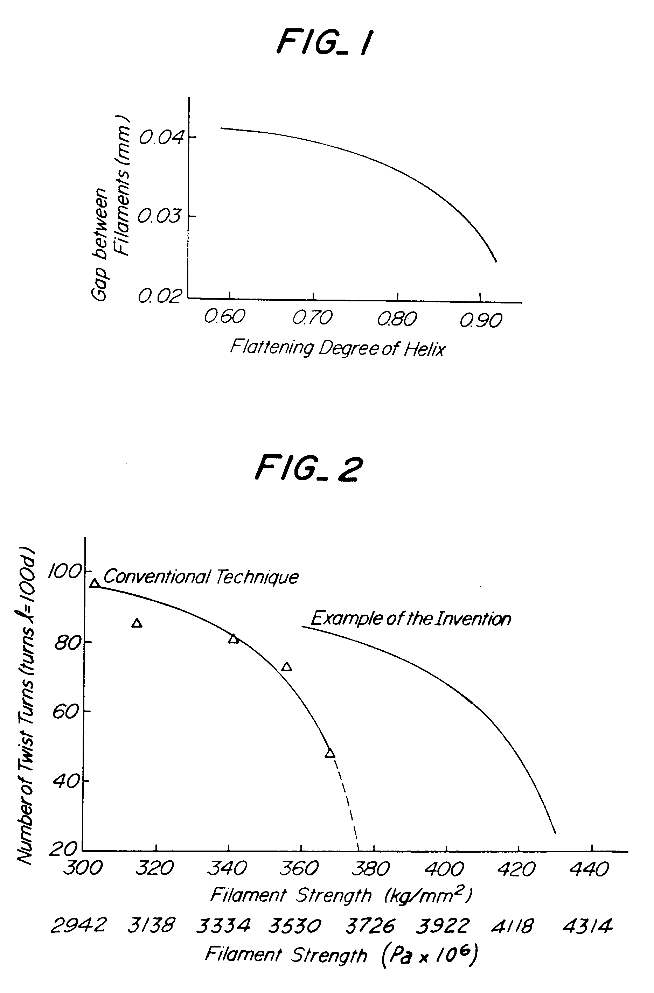

The formation of high strength steel filaments is achieved by making the filament diameter fine. For example, a hard steel filament of JIS G3521 has a tensile strength of $3.38 \times 10^6$ Pa (320 kgf/mm$^2$) at maximum in a filament diameter of 0.08 mm, and a piano wire has a tensile strength of $3481 \times 10^6$ Pa (355 kgf/mm$^2$) at maximum in a filament diameter of 0.08 mm. In Japanese Patent laid open No. 62-192532, steel filaments having a strength of $3609 \times 10^6$ Pa (368 kg/mm$^2$) and number of twist turns of 48 are obtained by holding a transformation temperature for five seconds after the completion of wire transformation during the patenting and subjecting to working corresponding to true strain of not less than 3 to obtain general-purpose steel filaments containing 0.74% by weight of carbon as described in Example 2, Table 1a and then subjecting these filaments to a drawing at a true strain of 4.14. However, the relation between strength and number of twist turns based on the data of Examples is shown in Fig. 2, so that the number of twist turns rapidly lowers when the strength is about $3491 \times 10^6$ Pa (356 kg/mm$^2$), and consequently it is extrapolated that the number of twist turns is 20 at the strength of $3687 \times 10^6$ Pa (376 kg/mm$^2$). Moreover, this reference does not mention how to use such a high strength steel filament as a cord for rubber reinforcement.

In order to reduce the flexural rigidity of the belt in radial tires, it is most effective to make small the diameter of the steel filament constituting the steel cord from a viewpoint of improvement of only steel cord for the belt. However, when the diameter of the filament is made small, the tenacity per filament is low, so that in order to maintain the tenacity of the steel cord at a constant level, it becomes advantageous to increase the number of filaments. If 6 or more filaments are twisted, the resulting cord has a core viewing its section, so that the sectional area of the cord is reduced and the in-plane flexural rigidity per the number of filaments lowers. Therefore, the number of filaments should be not more than 5.

On the other hand, the practically acceptable level of the belt strength is within a range lower by 30% than the generally used level. The belt strength is defined by cord tenacity $\times$ end count. When the end count is too large, it is difficult to apply an aligning jig for the steel cord used in the production step of the radial tire, and it becomes difficult to substantially produce radial tires. On the contrary, when the cord tenacity is lower than 196.1 N (20 kg), the cord is apt to be broken when the tire rides over obstructions such as stones scattered on the road surface. Therefore, in order to prevent the cord breakage, the cord tenacity is preferably not less than 342.2N (35 kg).

The filaments usually used have a strength of about $2746 \times 10^6$ Pa (280 kg/mm$^2$) and a diameter of about 0.23 mm. However, in order to enhance the road gripping property of the radial tire and improve the ground contacting property of the tread, the ratio of flexural rigidity to cord tenacity should be 0.04-0.14 (mm$^2$), preferably 0.04-0.12 (mm$^2$), so that the filament diameter is 0.12-0.20 mm and the tensile strength of the filament is preferably not less than $3334 \times 10^6$ Pa (340 kg/mm$^2$), particularly not less than $3530 \times 10^6$ Pa (360 kg/mm$^2$).

Since the number of filaments constituting the steel cord is preferably to be increased as far as possible, the use of five filaments is most preferable, but in this case the strength of the filament should be preferably not less than about $3334 \times 10^6$ Pa (340 kg/mm$^2$) in order to maintain the cord tenacity near to that of the general-purpose cord. As the filament strength becomes high, the filament diameter and the flexural rigidity of the cord can be reduced, but when the strength exceeds $4413 \times 10^6$ Pa (450 kg/mm$^2$), the fatigue resistance considerably lowers.

On the other hand, in order to enhance the durability of the radial tire, considering the steel cord alone, it is preferable to adopt a so-called open-type steel cord in which the sectional area of the steel cord is made large and a gap is formed between the filaments as compared with the compact cord section.

When the average forming ratio of the filament in the open-type steel cord exceeds 140%, the filament is apt to elongate even by the application of slight force at the tire production step, and consequently the appearance of the tire product becomes poor, the alignment of the cords is non-uniform, the utilization ratio of cord tenacity lowers, and the sectional area of the cord is reduced at the calender step of penetrating rubber into the inside of the cord and a vulcanization step of applying force to the cord to lower the

4

penetrability of rubber into the cord for the belt of the tire.

In order to enhance the rubber penetrability into the belt cords, it is preferable to increase the average forming ratio of helically formed filament, but the upper limit of the average forming ratio should be suitably 140% because of the aforementioned problems, while the lower limit is suitably 110% for penetrating rubber into the inside of the cord to sufficiently provide the resistance to fatigue corrosion against water.

Furthermore, it is preferable to make the helical form of the filament flat for improving the rubber penetrability into the inside of the cord. In the invention, the mechanical durability of the rubber article is particularly improved by making the diameter of the filament small, so that it is also required to improve the corrosion resistance of the steel cord against water. For this end, the helical form of the filament is made flat to widen the gap between the filaments. The relation between flattening ratio and gap among filaments when five filaments having a filament diameter of 0.18 mm are formed so that the diameter of helical form is 0.65 mm, twisted together and subjected to flattening is concretely shown in Fig. 1.

According to the invention, it is preferable to use high carbon steel filament having a carbon content of 0.78-0.86% by weight. As the steel filament, use may be made of SWRH82A and SWRH82B defined in JIS G3506, SWRS80A, SWRS80B, SWRS82A and SWRS82B defined in JIS G3502 and the like.

Furthermore, the carbon content at the surface layer portion of the filament drawn to a given final diameter is preferably not less than 0.70% by weight for maintaining or increasing the fatigue resistance.

Moreover, the flexural rigidity of the steel cord defined in the invention is calculated from the following equation:

$$B = \frac{2n \sin\alpha}{\left\{ \dfrac{(1 + \sin^2\alpha)}{EI} + \dfrac{\cos^2\alpha}{2GI} \right\}}$$

B:     flexural rigidity ($kg \cdot mm^2$)
n:     number of filaments
$\alpha$:     twisting angle (degree)
E:     Young's modulus ($205, 900 \times 10^6$ Pa ; 21,000 $kg/mm^2$)
I:     secondary sectional moment ($I = \pi/64 \cdot d^4$)
d:     filament diameter (mm)
G:     modulus of rigidity ($82370 \times 10^6$ Pa ; 8400 $kg/mm^2$)

The following examples are given in illustration of the invention and are not intended as limitations thereof.

Various steel cords for the belt reinforcement were produced according to design factors shown in the following Table 1, which were then used as a belt cord to manufacture various radial tires having tire sizes of 185/65 R15, 185/70 R14 and 195/65 R15.

The tire performances were evaluated with respect to these tires by the following tests.

Test of lap time/feeling

Test conditions

tire size: 185/70 R14
vehicle: Gallant 4WD, made by Mitsubishi Motor Co., Ltd.
test course: Maruwa Autoland in Nasu 1.8 km (dirt course)(dry hard course)

Lap time evaluation

It is evaluated by shortening from a lap time of 1 minute 17 seconds 40 in control tire (Comparative Example 1).

Feeling evaluation

The controlling property, gripping property and traction property are evaluated by actually running by a professional driver and indicated at the following three stages:
A: good level

B: approximately equal to control
C: poor level

Test of cut burst

Test conditions

tire size: 185/70 R14, 185/65 R15, 195/65 R15 vehicle: Gallant 4WD, made by Mitsubishi Motor Co., Ltd. Pulsar, made by Nissan Motor Co., Ltd. Legacy, made by Fuji Heavy Industries, Ltd.
test course: bad roads in Japan and foreign countries

Evaluation of cut burst

The broken state of the steel cord for belt reinforcement of the tire after the running is confirmed by an X-ray.

The measured results are shown in Table 1.

## Table 1(a)

| Design factors | | Comparative Example 1 | Comparative Example 2 | Comparative Example 3 | Example 1 | Example 2 | Example 3 | Example 4 |
|---|---|---|---|---|---|---|---|---|
| | Twisting structure | 1 × 5 | 1 × 5 | 1 × 5 | 1 × 5 | 1 × 3 | 1 × 4 | 1 × 5 |
| | Filament diameter (mm) | 0.22 | 0.20 | 0.12 | 0.14 | 0.18 | 0.18 | 0.18 |
| | Cord tenacity $N$ (kg) | 505.0 (51.5) | 460.1 (47.0) | 156.7 (16.0) | 264.8 (27.0) | 276.5 (28.2) | 367.7 (37.5) | 460.9 (47) |
| | Tensile strength $Pa \times 10^6$ (kg/mm²) | 2657 (271) | 2932 (299) | 2775 (283) | 3442 (351) | 3628 (370) | 3618 (369) | 3628 (370) |
| | Flexural rigidity/cord tenacity | 0.222 | 0.161 | 0.058 | 0.069 | 0.109 | 0.109 | 0.109 |
| | Average forming ratio | 110 | 115 | 135 | 135 | 125 | 135 | 130 |
| | Flattening degree | 0.90 | 0.90 | 0.80 | 0.80 | 0.75 | 0.80 | 0.80 |
| | End count (cords/5 cm) | 43.2 | 47.3 | 139 | 82.3 | 78.8 | 59.3 | 47.3 |

Table 1(b)

| | | | Comparative Example 1 | Comparative Example 2 | Comparative Example 3 | Example 1 | Example 2 | Example 3 | Example 4 |
|---|---|---|---|---|---|---|---|---|---|
| Tire performances | | Shortening of lap time | Time of control (1 min. 17 sec. 40) | 0 sec. 39 | 1 sec. 94 | 1 sec. 93 | 1 sec. 55 | 1 sec 58 | 1 sec 59 |
| | Feeling test | Total evaluation | poor | poor | good | good | good | good | good |
| | | Absolute evaluation of gripping property, controlling property and traction property | controlling property is slightly good, but gripping and traction properties are considerably poor | controlling, gripping and traction properties are not satisfactory level | gripping and traction properties are good, but limit controlling property is unstable | gripping, traction and controlling properties are high level and very good | gripping, traction and controlling properties are good level | gripping, traction and controlling properties are good level | gripping, traction and controlling properties are good level |
| | | Relative evaluation | control | B | A | A | A | A | A |
| | Cut burst (running on rough road) | | none | none | occurrence of cut burst | none | none | none | none |

As seen from the test results of Table 1, in the radial tires according to the invention, the steel cords having high tenacity, low flexural rigidity and good flexibility are used as a belt cord, so that the durability, steering stability, comfortability against vibrations and high-speed running performances are excellent.

8

**Claims**

1.  A pneumatic radial tire comprising at least one belt layer of steel cords between a tread portion and a carcass ply, characterised in that said steel cord satisfies the following conditions:
    (1) single twisting structure: 1 x n (n = 2-5);
    (2) ratio of flexural rigidity to cord tenacity; 0.04-0.14 (mm$^2$);
    (3) cord tenacity: 196.1-784.5 N (20-80 kg); and
    (4) filament diameter: 0.12-0.20 mm.

2.  A tire according to claim 1, characterized in that the filaments of the steel cord have a tensile strength of 3334-4413 x 10$^6$ Pa (340-450 kg/mm$^2$).

3.  A tire according to claim 2, characterized in that the said tensile strength is 3530-4413 x 10$^6$ Pa (360-450 kg/mm$^2$).

4.  A tire according to any one of the preceding claims, characterized in that the ratio of flexural rigidity to cord tenacity in the steel cord is 0.04-0.12 (mm$^2$).

5.  A tire according to any one of the preceding claims, characterized in that the steel has a cord tenacity of 343.2-784.5 N (35-80 kg).

6.  A tire according to any one of the preceding claims, characterized in that the twisting structure of the steel cord is 1 x 5.

7.  A tire according to claim 2, characterised in that the steel cord filament, has an average forming ratio of not less than 120%.

8.  A tire according to claim 2, characterized in that the steel cord filament is shaped at an average forming ratio of not less than 120% into a helically flat form and the flattening ratio is not more than 0.85.

9.  A tire according to claim 2, characterized in that the steel cord filament is a high carbon steel filament having a carbon content of 0.78-0.86% by weight and the carbon content of a surface layer portion thereof is not less than 0.70% by weight.

**Patentansprüche**

1.  Radialer Luftreifen, der mindestens eine Gürtelschicht aus Stahlcordfäden zwischen einem Laufflächenbereich und einer Karkassenlage aufweist, dadurch gekennzeichnet, daß der Stahlcordfaden die folgenden Bedingungen erfüllt:
    (1) Einzelverdrillings-Struktur: 1 x n (n = 2-5);
    (2) Verhältnis von Biegesteifigkeit zu Cordfaden-Reißlast: 0,04-0,14 mm$^2$;
    (3) Cordfaden-Reißlast: 196,1-784,5 N (20-80 kg); und
    (4) Filamentdurchmesser: 0,12-0,20 mm.

2.  Reifen gemäß Anspruch 1, dadurch gekennzeichnet, daß die Filamente des Stahlcordfadens eine Zugfestigkeit von 3334-4413 x 10$^6$ Pa (340-450 kg/mm$^2$) haben.

3.  Reifen gemäß Anspruch 2, dadurch gekennzeichnet, daß die Zugfestigkeit 3530-4413 x 10$^6$ Pa (360-450 kg/mm$^2$) beträgt.

4.  Reifen gemäß irgendeinem der vorhergehenden Ansprüche, dadurch gekennzeichnet, daß das Verhältnis von Biegesteifigkeit zu Cordfaden-Reißlast bei dem Stahlcordfaden 0,04-0,12 mm$^2$ beträgt.

5.  Reifen gemäß irgendeinem der vorhergehenden Ansprüche, dadurch gekennzeichnet, daß der Stahlcordfaden eine Cordfaden-Reißlast von 343,2-784,5 N (35-80 kg) hat.

**6.** Reifen gemäß irgendeinem der vorhergehenden Ansprüche, dadurch gekennzeichnet, daß die Verdrillungsstruktur des Stahlcordfadens 1 x 5 ist.

**7.** Reifen gemäß Anspruch 2, dadurch gekennzeichnet, daß das Stahlcordfaden-Filament ein mittleres Formungsverhältnis von nicht weniger als 120% hat.

**8.** Reifen gemäß Anspruch 2, dadurch gekennzeichnet, daß das Stahlcordfaden-Filament bei einem mittleren Formungsverhältnis von nicht weniger als 120% zu einer schraubenförmig flachen Form geformt ist, und das Abflachungsverhältnis nicht größer als 0,85 ist.

**9.** Reifen gemäß Anspruch 2, dadurch gekennzeichnet, daß das Stahlcordfaden-Filament ein Filament aus kohlenstoffreichem Stahl ist, das einen Kohlenstoffgehalt von 0,78-0,86 Gewichtsprozent hat, und bei dem der Kohlenstoffgehalt eines Oberflächenschicht-Bereichs nicht niedriger als 0,70 Gewichtsprozent ist.

## Revendications

**1.** Bandage pneumatique radial comprenant au moins une couche de ceinture de câblés en acier entre une bande de roulement et une nappe de carcasse, caractérisé en ce que lesdits câblés en acier répondent aux conditions ci-après:
   (1) structure à torsion unique: 1 x n (n = 2-5);
   (2) rapport rigidité à la flexion/ténacité du câblé 0,04-0,14 mm$^2$;
   (3) ténacité du câblé: 196,1-784,5 N (20-80 kg); et
   (4) diamètre du filament: 0,12-0,20 mm.

**2.** Bandage pneumatique selon la revendication 1, caractérisé en ce que les filaments des câblés en acier possèdent une résistance à la traction de 3334-4413 x 10$^6$ Pa (340-450 kg/mm$^2$).

**3.** Bandage pneumatique selon la revendication 2, caractérisé en ce que ladite résistance à la traction est de 3530-4413 x 10$^6$ Pa (360-450 kg/mm$^2$).

**4.** Bandage pneumatique selon l'une quelconque des revendications précédentes, caractérisé en ce que le rapport rigidité à la flexion/ténacité du câblé dans les câblés en acier est de 0,04-0,12 mm$^2$.

**5.** Bandage pneumatique selon l'une quelconque des revendications précédentes, caractérisé en ce que l'acier possède une ténacité de câblé de 343,2-784,5 N (35-80 kg).

**6.** Bandage pneumatique selon l'une quelconque des revendications précédentes, caractérisé en ce que la structure de torsion des câblés en acier est de 1 x 5.

**7.** Bandage pneumatique selon la revendication 2, caractérisé en ce que les filaments des câblés en acier possèdent un coefficient de forme moyen qui n'est pas inférieur à 120%.

**8.** Bandage pneumatique selon la revendication 2, caractérisé en ce que les filaments des câblés en acier sont façonnés avec un coefficient de forme moyen qui n'est pas inférieur à 120% en une forme hélicoïdale plate, le rapport d'aplatissement n'étant pas supérieur à 0,85.

**9.** Bandage pneumatique selon la revendication 2, caractérisé en ce que le filament des câblés en acier est un filament en acier à teneur élevée en carbone, possédant une teneur en carbone de 0,78-0,86% en poids, la teneur de sa couche superficielle en carbone n'étant pas inférieure à 0,70% en poids.

## FIG_1

Gap between Filaments (mm)

Flattening Degree of Helix

## FIG_2

Number of Twist Turns (turns ℓ=100d)

Conventional Technique

Example of the Invention

Filament Strength (kg/mm²)

2942  3138  3334  3530  3726  3922  4118  4314

Filament Strength (Pa x 10⁶)

11